# EUROPEAN PATENT APPLICATION

(11) **EP 1 845 707 A1**
(43) Date of publication of application: **17.10.2007**
(21) Application number: 06425251.3
(22) Date of filing: 10.04.2006
(51) Int. Cl.: H04N 5/00, H04N 7/16

(54) **System and method for controlling conditional access by a decoder to multimedia information distributed over a communication network**

(71) Applicant: Telsey S.p.A., 31055 Quinto di Treviso (IT)
(72) Inventor: Costacurta, Riccardo, 35010 Vigonza (IT); Mestriner, Roberto, 31057 Silea (IT)
(74) Representative: Jorio, Paolo

(57) **Abstract**

A decoder (3) for accessing a transmitting-receiving system (5) to receive coded multimedia information (B) and supply it in decoded form (A) to a user interface device (4); the decoder (3) having a control system (22) for determining access to the information by the decoder (3) complies with a number of access conditions established by a given access control platform. The control system (22) has a number of memories (23), each containing a loader (Lᵢ) implementable by the control system (22) to check at least a first access condition; a nonvolatile memory containing one of a number of check messages (CASᵢ) associated with respective access control platforms; and a processing unit (9) for selectively enabling reading of one of the memories (23) to access the loader (Lᵢ) associated with the check message (CASᵢ) contained in the nonvolatile memory (12), and for comparing the check message (CASᵢ) and the loader (Lᵢ) to determine access complies with the first access condition.

## Description

The present invention relates to a system and method for controlling conditional access by a decoder to multimedia information distributed over a communication network.

More specifically, the present invention relates to a system for modifying the conditional access configuration of a multimedia decoder, such as a Set Top Box, to which the following description refers purely by way of example.

As is known, Set Top Boxes are decoders which allow a user interface device, such as a television device, access to multimedia information or applications available over a communication network, so as to transmit them in audio and/or video format to a user. Such information may comprise, for example, PPV (Pay Per View) TV programmes, VOD (Video On Demand), games, etc., and is transmitted over the communication network by one or more distribution companies in coded form to only allow access by company-authorized users.

To enhance information access security, last-generation Set Top Boxes are equipped with an access control system, which performs various Set Top Box hardware and software checks to determine conformance with all the conditions and/or regulations governing multimedia information access, and which are set out in an access control platform established by the distribution company.

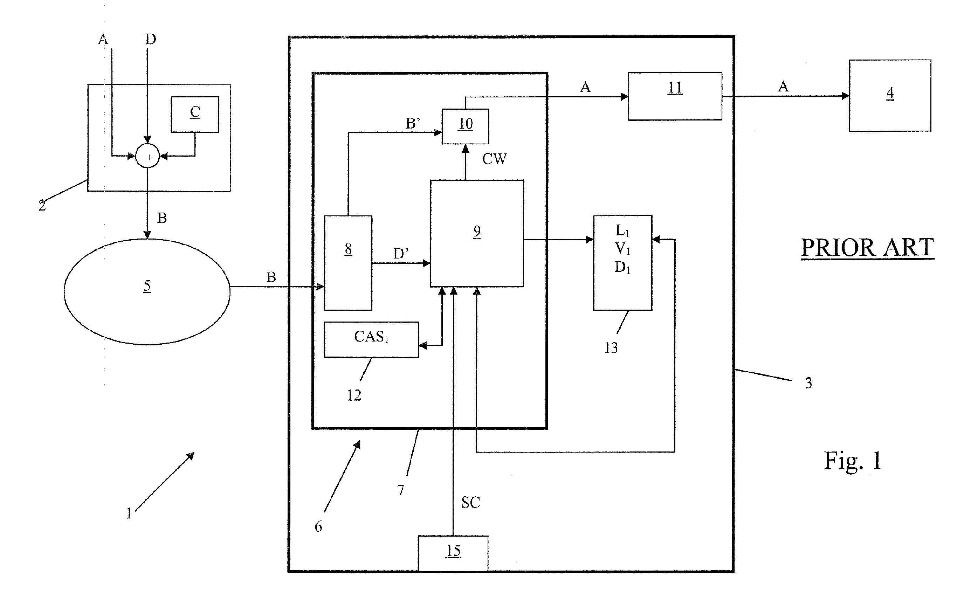

Figure 1 shows one example of a conditional-access multimedia information distribution system 1, which substantially comprises a remote streaming unit 2 generating a coded information signal B containing the multimedia information for distribution; a number of Set Top Boxes 3 (only one shown in Figure 1) which decode the coded information signal B to supply "clear" multimedia information to a user interface device 4; and a transmitting-receiving system 5 which transmits the multimedia information generated by streaming unit 2 to Set Top Boxes 3.

More specifically, streaming unit 2 receives the multimedia information A, and codes it into information signal B according to a given code algorithm C and on the basis of various code messages. The code messages and algorithm C are established as a function of the access control platform.

Streaming unit 2 also codes into the information signal decoding information containing decoding messages D, typically an entitlement control message (ECM) necessary to descramble the information, and/or an entitlement management message (EMM).

Transmitting-receiving system 5 transmits the coded information signal B by satellite or digital terrestrial transmission or cable (e.g. wide-band) to Set Top Boxes 3, which decode and transmit it in "clear" form to interface device 4.

More specifically, Set Top Box 3 has an access control system 6 for determining conformance with the information access conditions and regulations in the access control platform.

More specifically, access control system 6 typically comprises a processing unit defined by a CPU 7 having a multiplexer block 8, which receives the coded information signal B, and supplies coded multimedia information B' at a first output, and decoding information D', i.e. EMM/ECM messages, at a second output; a processing block 9 supplying a control word CW; a descrambler 10 receiving coded multimedia information B' at a first input, and control word CW at a second input, and supplying clear multimedia information A at the output; and a video decoder block 11 which, as a function of the decoded multimedia information, reconstructs the image in a specific video format, e.g. MPEG1/2/4, H264, VC-1, or similar.

Access control system 6 of Set Top Box 3 also has a nonvolatile memory 12, e.g. a CRIPTORAM, containing a check message CAS₁ related to the access control platform implemented by streaming unit 2; and a nonvolatile, one-time-programmable (OTP) memory 13 containing a control program - hereinafter referred to as loader L₁ - in turn containing an integrity check program V₁, and a decoding algorithm D₁.

In the example shown, check program V₁ is implemented by processing block 9 to check the integrity of Set Top Box as regards tampering or unauthorized, e.g. pirate, modifications of the hardware or software of Set Top Box 3 to gain fraudulent access to multimedia information; and decoding algorithm D₁ is implemented by processing block 9 to process the decoding information, i.e. EMM/ECM messages supplied by multiplexer block 8, and external security information SC supplied by a Smart Card read module 15, so as to generate the control word CW necessary for descrambler 10 to decode the multimedia images.

In actual use, upon restart/reset of Set Top Box 3, control system 6 checks conformance of Set Top Box 3 with the information access conditions in the access control platform. More specifically, access conditions are checked implementing check program V₁, which generates a control value related to the integrity of Set Top Box 3, and compares the control value with the check message CAS₁ stored in memory 12. If a predetermined relationship exists between the control value and check message CAS₁, the access condition is complied with, and control system 6 implements the decoding algorithm D₁ associated with the access control platform to generate the control word CW necessary for descrambler 10 to decode the multimedia image B'. Conversely, if the access condition is not complied with, Set Top Box 3 is denied access to the multimedia information.

Access control system 6 as described above has the drawback of being fairly inflexible as regards changes to the access control platform. That is, whenever modifications are made by the company to the access control platform, the check message CAS₁ and loader L₁ memorized in Set Top Boxes 3 must be replaced with a new check message CAS₂ and loader L₂ characterizing the new control platform. Updating of this sort calls for direct operator intervention to reprogram memory 12 with the new check message CAS₂ and, at the same time, physically replace OTP memory 13 with a new OTP memory 13 containing the updated loader L₂. All of which, besides being inconvenient and complicated, obviously involves a good deal of expense.

It should also be pointed out that the software and hardware architecture of the above control system 6 - employing an OTP memory 13 containing the loader, and a separate nonvolatile memory containing check message CAS₁ - is unavoidable in current access control platforms. Using a one-time-programmable as opposed to a reprogrammable memory, in fact, prevents any tampering or fraudulent reading of the memorized loader, while storing the check message CAS₁ and loader L₁ in two physically separate memories provides for greater security.

It is therefore an object of the present invention to provide a system for controlling conditional access by a decoder to coded multimedia information, which is highly versatile and adapts easily to access control platforms, while at the same time guaranteeing the same level of security demanded by current access control platforms.

According to the present invention, there is provided a decoder as claimed in Claim 1 and, preferably, in any one of the following Claims depending directly or indirectly on Claim 1.

According to the present invention, there is also provided a multiple-conditional-access information communication system as claimed in Claim 9.

According to the present invention, there is also provided a method of controlling conditional access by a decoder to multimedia information, as claimed in Claim 10 and, preferably, in any one of the following Claims depending directly or indirectly on Claim 10.

A non-limiting embodiment of the present invention will be described by way of example with reference to the accompanying drawings, in which:
Figure 1 shows, schematically, a conditional-access multimedia information communication system featuring a known decoder;
Figure 2 shows, schematically, a conditional-access multimedia information communication system featuring a decoder implementing an access control system in accordance with the present invention;
Figure 3 shows a flow chart of the operations performed by the method of controlling conditional access by a decoder to multimedia information in accordance with the teachings of the present invention.

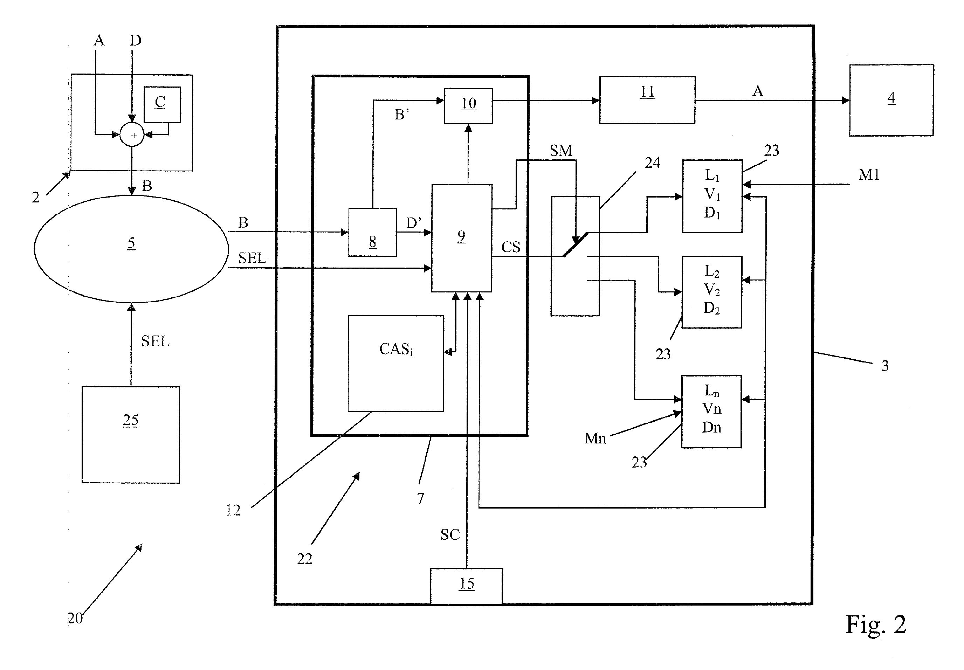

Number 20 in Figure 2 indicates as a whole a multiple-conditional-access multimedia information communication system, which is similar to system 1 in Figure 1, and the component parts of which are indicated below, when possible, using the same reference numbers as for the corresponding parts of system 1 described above.

Each Set Top Box 3 in system 20 comprises an access control system 22 which, as opposed to one OTP memory as in access control system 6, comprises a number of OTP memories 23 containing respective loaders Lᵢ associated with corresponding separate, predetermined access control platforms; and a switching device 24, by which processing block 9 gains read access to a specific OTP memory 23 to read and so implement a given loader Lᵢ.

More specifically, Set Top Box 3 comprises i number of OTP memories 23 (where i is 1 to n), each comprising a loader Lᵢ associated with a given conditional-access platform and defined by a check program Vᵢ and a decoding algorithm Dᵢ. In the example shown, check program Vᵢ is related to a check message CASᵢ established by the i-th conditional-access platform implementable in streaming unit 2 to code multimedia information B.

Switching device 24 may preferably, though not necessarily, comprise a permanent switch, which comprises an enabling input receiving a read-enable signal, e.g. a Chip Select signal CS, from processing block 9; a number of outputs, each connected to an enabling terminal of a respective OTP memory 23; and a select terminal supplied by processing block 9 with a memory select signal SM, which switches the enabling input to one of the n outputs to read-enable the OTP memory 23 selected by processing block 9.

With reference to Figure 2, unlike system 1, system 20 also comprises a remote unit 25 for controlling conditional-access modifications, and which, upon a request being received to modify the access control platform established by streaming unit 2, transmits to Set Top Box 3, via transmitting-receiving system 5, a select signal SEL containing a check message CASₙ and a command to update or replace the check message CASᵢ in memory 12 with the new check message CASₙ.

Set Top Box 3 receives and processes signal SEL to determine the new check message CASₙ, and at the same time commands replacement of the check message CASᵢ in memory 12 with the new check message CASₙ received. In the example shown, processing block 9 commands updating of check message CASᵢ in memory 12 with check message CASₙ, and at the same time determines, as a function of check message CASₙ, which OTP memory 23 to select to load the loader Lₙ associated with check message CASₙ.

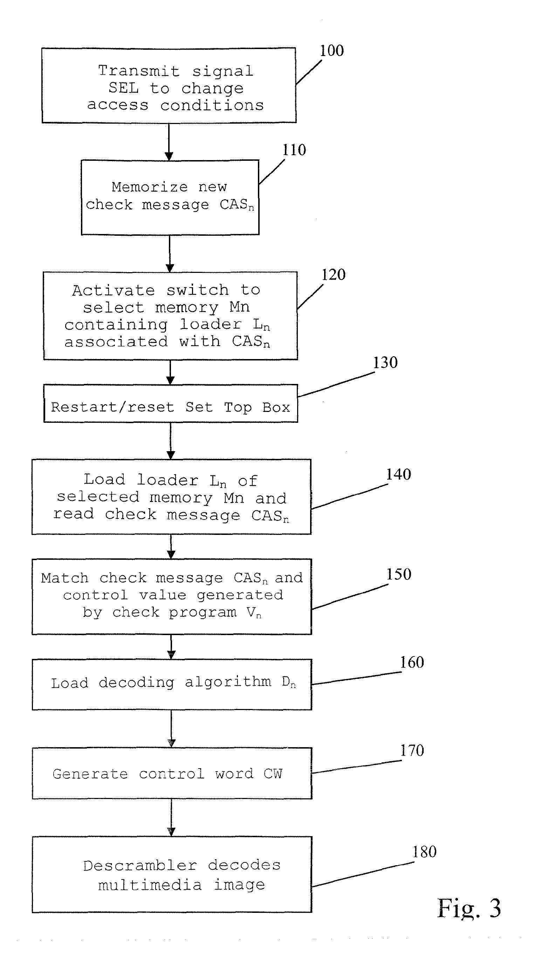

Figure 3 shows a flow chart of the operations performed by the operating method of access control system 22, in which Set Top Box 3 is assumed initially configured to access multimedia information implementing a conditional access established by an access platform characterized by a check message CAS₁ and a loader L₁. In which case, memory 12 of Set Top Box 3 contains check message CAS₁; and processing block 9, via memory select signal SM, commands the switching device to read the OTP memory 23 containing loader L₁, e.g. the memory indicated M1 in Figure 2.

To replace the conditional-access platform with a new access platform characterized by a new check message CASₙ and by a loader Lₙ in the n-th OTP memory 23 (indicated Mn) of Set Top Box 3, remote unit 25, via transmitting-receiving system 5, transmits signal SEL indicating the change in access conditions and containing check message CASₙ and the update command (block 100).

At this point, processing block 9 receives signal SEL, commands reprogramming of memory 12 by substituting CASₙ for CAS₁ (block 110), and, on the basis of CASₙ, generates signal SM to switch switching device 24 to select the memory 23 (indicated Mn) containing the respective loader Lₙ (block 120) .

Set Top Box 3 is then restarted/reset (block 130) to enable conditional-access multimedia information reception in accordance with the new access control platform.

Being permanent, switching device 24 remains in the last pre-reset configuration, so that, when Set Top Box 3 is reset, processing block 9 reads the newly-selected OTP memory 23, loads loader Lₙ, and at the same time reads the new updated check message CASₙ (block 140). More specifically, at this step, processing block 9 implements the Set Top Box 3 integrity check program Vₙ to acquire the control value, and checks the control value and the new check message CASₙ satisfy a predetermined relationship (block 150) .

At this point, if the check is positive, processing block 9, implementing decoding algorithm Dₙ (block 160), processes the decoding information D' supplied by multiplexer block 8, i.e. ECM/EMM, to determine the control word CW (block 170) to supply to descrambler 10, which decodes the multimedia image (block 180).

Access control system 22 as described above has the advantage of permitting highly flexible alterations to access conditions alongside changes to the access control platform, and so permitting multiple as opposed to single access control.

While still maintaining the same level of security derived by physically separating check messages CASᵢ and loaders Lᵢ, the access conditions of the Set Top Box can be updated with no need for in-field operator intervention to replace the OTP memories, and with obvious benefits in terms of expense and versatile control of Set Top Box access to multimedia information.

Clearly, changes may be made to the system, method, and decoder as described and illustrated herein without, however, departing from the scope of the present invention as defined in the accompanying Claims.

In one variation (not shown), memory 12 comprises a number of check messages CASᵢ (where i is 1 to n), each associated with a given loader Lᵢ stored in a given OTP memory 23; and signal SEL transmitted by remote unit 25 contains the update command, and selection information indicating to processing block 9 the new check message to adopt. In this case, processing block 9 processes signal SEL, selects the new check message from memory 12 on the basis of the selection information, and, on the basis of the new check message, switches switching device 24 to load and implement, after the Set Top Box is restarted, the loader Lᵢ associated with the newly selected check message CASᵢ.

This variation is extremely advantageous by enhancing access security. That is, being stored in memory 12, the check messages need not be transmitted over the communication network, with obvious advantages in terms of computer security.

In a further embodiment (not shown), the n check messages CASᵢ may be stored in an OTP memory, i.e. an OTP memory separate from nonvolatile memory 12.

## Claims

1. A decoder (3) for accessing a transmitting-receiving system (5) to receive coded multimedia information (B') and supply it in decoded form (A) to a user interface device (4); said decoder (3) comprising a control system (22) for determining access by said decoder (3) complies with a number of access conditions established by a given access control platform; said control system (22) being **characterized by** comprising:
- a number of memories (23) associated with respective access control platforms; each memory (23) comprising a loader (Lᵢ) containing a number of operations (Vᵢ, Dᵢ) implementable by the control system (22) to check at least a first access condition established by a given access control platform; said access control platforms comprising respective check messages (CASᵢ) associated with a relative first access condition;
- memory means (12) containing at least one of said check messages (CASᵢ) associated with the respective access control platforms;
- processing means (9) for selectively enabling reading of one of said memories (23) to access the loader (Lᵢ) associated with the check message (CASᵢ) contained in said memory means (12), and for comparing said check message (CASᵢ) and said loader (Lᵢ) to determine access to the information by said decoder (3) complies with said first access condition.

2. A decoder as claimed in Claim 1, and comprising switching means (24) in turn comprising a number of outputs, each connected to a respective memory (23); an input receiving a read-enable signal (CS) for enabling reading of the memory (23); and a control terminal receiving a control signal (SM) for switching said input to one of said outputs; said processing means (9) generating the read-enable signal (CS) and said control signal (SM) as a function of said check message (CASᵢ) stored in said memory means (12), so as to enable reading of the memory (23) containing the loader (Lᵢ) associated with said check message (CASᵢ).

3. A decoder as claimed in Claim 1 or 2, wherein, upon receiving a select signal (SEL) indicating adoption of a given access control platform, the processing means (9) replace a first check message (CAS₁), contained in said memory means (23) and associated with a first access control platform, with a second check message (CAS₂) associated with a second access control platform corresponding to the access control platform indicated in said select signal (SEL).

4. A decoder as claimed in Claim 3, wherein said select signal (SEL) comprises said second check message (CAS₂).

5. A decoder as claimed in Claim 4, wherein, after replacing the first check message (CAS₁) with the second check message (CAS₂), said processing means (9) select the memory (23) containing the loader (L₂) associated with said second check message (CAS₂).

6. A decoder as claimed in Claim 2, wherein the memory means (12) comprise a number of check messages (CASᵢ), each associated with a respective loader (Lᵢ) memorized in one of said memories (23); said processing means (9) selecting one of said check messages (CASᵢ) as a function of a select signal (SEL) indicating adoption of a given access control platform.

7. A decoder as claimed in any one of the foregoing Claims, wherein said loader (Lᵢ) memorized in each said memory (23) comprises a check program (Vᵢ) for checking the integrity of the decoder (3), and a decoding algorithm (Dᵢ) for decoding said multimedia information.

8. A decoder as claimed in any one of the foregoing Claims, wherein said memories (23) are one-time-programmable memories (OTP).

9. A multiple-conditional-access multimedia information communication system (1), **characterized by** comprising:
- a streaming unit (2) for generating a coded information signal (B) containing multimedia information (A);
- a number of decoders (3), each of which decodes the coded information signal (B) to supply clear multimedia information (A) to a user interface device (4);
- a transmitting-receiving system (5) for transmitting to the decoders (3) the multimedia information (A) generated by the streaming unit (2);
said communication system being **characterized in that** said decoders (3) are as claimed in any one of the foregoing Claims; and by comprising a remote platform control unit (25) for transmitting to said decoders (3), via said transmitting-receiving system (5), a select signal (SEL) indicating adoption of a given access control platform; each of said decoders (3) replacing an old check message (CAS₁), contained in memory means (12), with a new check message (CAS₂) associated with the access control platform coded in said select signal (SEL), and commanding reading of a memory (23) containing a loader (L₂) associated with the memorized new check message (CAS₂).

10. A method of controlling conditional access by a decoder (3) to coded multimedia information supplied by a transmitting-receiving system (5); said method comprising the step of determining access by said decoder (3) to the multimedia information complies with a number of access conditions established by a given access control platform; said method being **characterized by** comprising the steps of:
- memorizing, in a number of memories (23) associated with respective access control platforms, respective loaders (Lᵢ), each of which contains a number of operations (Vᵢ, Dᵢ) for checking at least a first access condition established by a given access control platform; said access control platforms comprising respective check messages (CASᵢ) associated with a relative first access condition;
- memorizing, in memory means (12), at least one of said check messages (CASᵢ) associated with the respective access control platforms;
said step of determining access by said decoder (3) complies with a number of access conditions comprises the step of:
a) selectively enabling (120, 130, 131) reading of one of said memories (23) to access the loader (Lᵢ) associated with the check message (CASᵢ) contained in said memory means (12);
b) comparing (150) said check message (CASᵢ) and said loader (Lᵢ) to determine whether access of said decoder (3) conforms with said first access condition.

11. A method as claimed in Claim 10, wherein said decoder (3) comprises switching means (24) in turn comprising a number of outputs, each connected to a respective memory (23); an input receiving a read-enable signal (CS) for enabling reading of the memory (23); and a control terminal receiving a control signal (SM) for switching said input to one of said outputs; said step a) comprising the step of generating said control signal (SM) as a function of the check message (CASᵢ) stored in said memory means (12), to access the loader (Lᵢ) associated with said check message (CASᵢ).

12. A method as claimed in Claim 11, wherein the memory means (12) contain a first check message (CAS₁), and the switching means (24) are configured to enable reading of a first loader (L₁) memorized in a first memory (23); said first loader (L₁) and said first check message (CAS₁) being associated with a first access control platform; and said method comprising the steps of:
- transmitting (100) to said decoder a select signal (SEL) indicating adoption of a second access control platform associated with a second check message (CAS₂);
- replacing (110), in said memory means (12), the first check message (CAS₁) with the second check message (CAS₂) ;
- selecting (120), by means of said switching means (24), the memory (23) containing a second loader (L₂) associated with said second check message (CAS₂).

13. A method as claimed in Claim 12, and comprising the step of coding said second check message (CAS₂) in the select signal (SEL).

14. A method as claimed in Claim 10 or 11, and comprising the step of memorizing in the memory means (12) a number of check messages (CASᵢ), each associated with a corresponding loader (Lᵢ) memorized in a respective said memory (23).

15. A method as claimed in Claims 11 and 14, wherein said switching means (24) are configured to enable reading of a first loader (L1) associated with a first check message (CAS1); said first loader (L1) and said first check message (CAS1) being associated with a first access control platform; and said method comprising the steps of:
- transmitting (100) to said decoder (3) a select signal (SEL) indicating adoption of a second access control platform;
- selecting (120), in said memory means (12), a second check message (CAS₂) associated with said second access control platform;
- selecting, by means of said switching means (24), the memory (23) containing a second loader (L₂) associated with said second check message (CAS₂).

16. A method as claimed in Claim 12 or 15, wherein, following selection of the memory (23) containing a second loader (L₂) associated with said second check message (CAS₂), said decoder (3) is reset/restarted.
